# EUROPEAN PATENT APPLICATION

(11) **EP 1 353 186 A2**
(43) Date of publication of application: **15.10.2003**
(21) Application number: 03007425.6
(22) Date of filing: 03.04.2003
(51) Int. Cl.: G01P 15/125, G01P 1/02

(54) **Accelerometer**

(30) Priority: 05.04.2002 JP 2002104300
(71) Applicant: JAPAN AVIATION ELECTRONICS INDUSTRY, LIMITED, Shibuya-ku, Tokyo 150-0043 (JP)
(72) Inventor: Ando, Yoshiyuki, Japan Aviation Electr. Ind. Ltd., Tokyo 150-0043 (JP)
(74) Representative: Hoffmann, Eckart, Dipl.-Ing.

(57) **Abstract**

In an accelerometer in which a frame 11 supporting a pendulum 12 through hinges 13 is held between a pair of opposed housings 15A and 15B and a displacement of the pendulum 12 is detected as changes in electrostatic capacitances between electrodes 23A, 23B formed on both sides of the pendulum 12 and electrodes surfaces 15Ac, 15Bc formed integrally with the housings 15A and 15B in opposing relation to the electrodes 23A and 23B, respectively, a C-shaped outer ring 31 having a slit 31 S formed in its periphery is mounted around the housings 15A and 15B and bonded thereto by a conductive adhesive to provide conduction between the housings 15A and 15B. The-shaped configuration of the outer ring 31 effectively prevents thermal stress form being produced in the outer ring 31, suppressing development of cracks in the conductive adhesive which causes changes in the conduction between the housings 15A and 15B.

## Description

### BACKGROUND OF THE INVENTION

The present invention relates to an accelerometer and, more particularly, to an accelerometer of excellent temperature characteristic which has a stable performance even in a high-temperature environment.

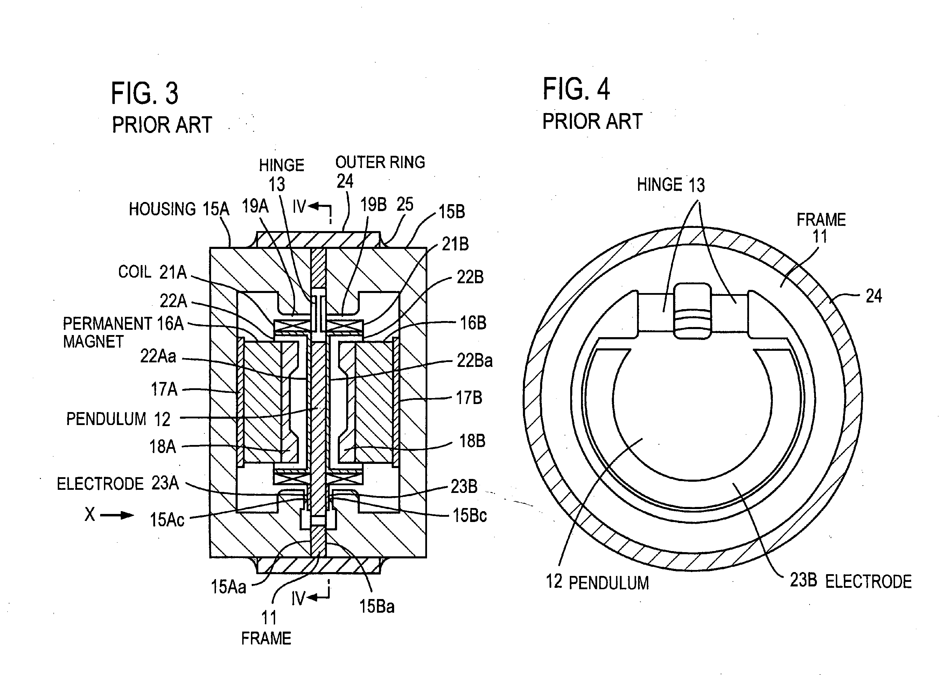

Figs. 3 and 4 schematically depict an example of a conventional accelerometer disclosed in Japanese Patent Application Publication No. 292208/96. The illustrated example is a servo-accelerometer in which coils 21A and 21B, which cross magnetic fluxes caused by permanent magnets 16A and 16B and magnetic housings 15A and 15B, are mounted on a pendulum 12 so that the current based on the displacement (the amount of deflection) of the pendulum 12 caused by an acceleration input flows into the coils 12A and 12B, bringing the pendulum 12 into a condition of equilibrium in the vicinity of the zero point.

As shown in Fig. 4, the pendulum 12, which is disposed within an annular frame 11, is substantially a disk-shaped member with a cutout formed in its circumferential portion, and the cut-out portion is connected via a pair of hinges to the frame 11. The frame 11, the pendulum 12 and the hinges 13 are molded in one piece as of quartz, and the hinges 13 are made thin enough to be elastically deformable.

The frame 11 is firmly held by a pair of opposed dish-shaped housings 15A and 15B. The housings 15A and 15B are made of a magnetic material which possesses electrical conductivity, such as invar of a small thermal expansion coefficient.

Disposed on the inside bottoms of the housings 15A and 15B centrally thereof are columnar permanent magnets 16A and 16B such as rare-earth-samarium-cobalt permanent magnets. The permanent magnets 16A and 16B in this example overlie disk-shaped bottom pole pieces 17A and 17B and underlie disc-shaped pole pieces 18A and 18B each having an edge flange raised about the periphery thereof. The bottom pole pieces 17A, 17B and the pole pieces 18A and 18B are made of electromagnetic soft iron (corresponding to JIS C2503). Incidentally, the bottom pole pieces 17A and 17B act to accommodate the difference in thermal expansion between the housings 15A, 15B and the permanent magnets 16A, 16B.

The permanent magnet 16A has its side in contact with the pole piece 18A magnetized with the north pole, for instance, and its other side in contact with the bottom pole piece 17A magnetized with the south pole. The housing 15A and the permanent magnet 16A constitute a magnetic circuit, and a magnetic gap 19A is defined between the inner peripheral surface of the open end portion of the housing 15A and the outer peripheral surface of the pole piece 18A. Similarly, a magnetic gap 19B is formed on the part of the housing 15B.

The coils 21A and 21B are mounted on both sides of the pendulum 12 so that they lie in the magnetic gaps 19A and 19B, respectively. The coils 21A and 21B are wound around bobbins 22A and 22B having their end faces covered with mounting plates 22Aa and 22Ba at the both sides of the pendulum 12. The mounting plates 22Aa and 22Ba are fixedly bonded to the pendulum 12, by which the coils 21A and 21B are mounted on the pendulum 12.

On both sides of the pendulum 12 there are deposited electrodes 23A and 23B in circular-arc form alongside of the coils 21A and 21B as depicted in Fig. 4. The opposed end faces of the housings 15A and 15B partly constitute electrode surfaces 15Ac and 15Bc adjacent but spaced apart from the electrodes 23A and 23B, respectively. That is, as shown in Fig. 3, the radially outermost portions of the opposed end faces of the housings 15A and 15B form abutting surfaces 15Aa and 15Ba which abut against the frame 11; and inside the abutting surfaces 15Aa and 15Ba and distant therefrom, the above-mentioned electrode surfaces 15Ac and 15Bc are disposed opposite the arcuate electrodes 23A and 23B of the pendulum 12 at predetermined distances therefrom. The electrodes 23A and 23B are led out as signal detecting terminals from the accelerometer via leads (not shown). One ends of the coils 21A and 21B are electrically interconnected and the other ends are led via leads (not shown) to the outside of the accelerometer.

Though not set forth in the afore-mentioned Japanese Patent Application Publication No. 292208/96, it is possible to assemble the housings 15A and 15B into a unitary structure by clamping them with an outer ring 24 put thereon astride their opposed marginal edges as shown in Fig. 3. The outer ring 24 establishes therethrough electric connections and between the housings 15A and 15B to hold them equipotential and provides their mechanical coupling. The outer ring 24 may be formed of an invar material as is the case with the housings 15A and 15B and bonded thereto using a conductive adhesive. In Fig. 3, reference numeral denotes the conductive adhesive.

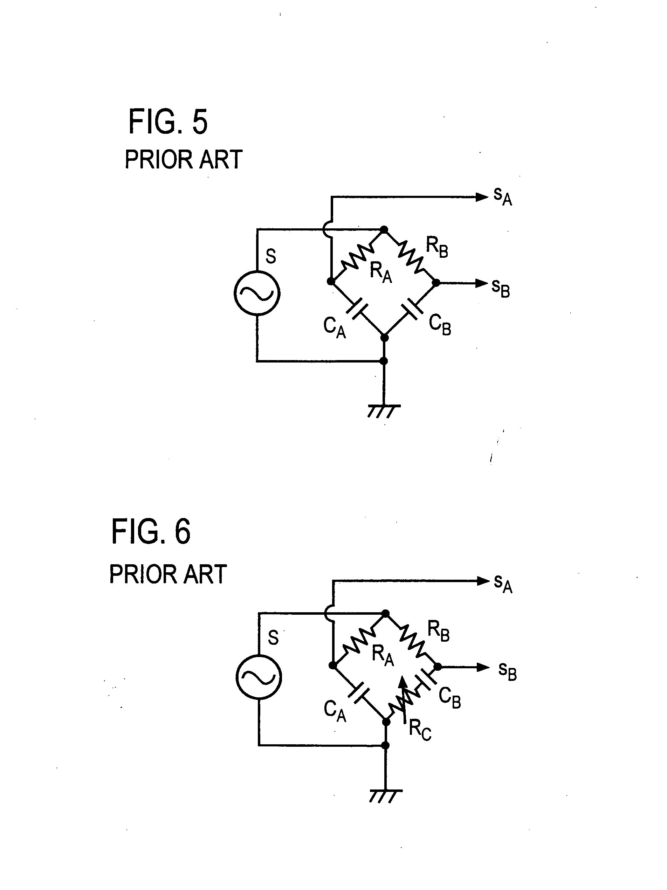

With the servo accelerometer of the above construction, an X-direction acceleration input swings the pendulum 12, and its displacement is detected as changes in the electrostatic capacitances between the electrode 23A and the electrode surface 15Ac and between the electrode 23B and the electrode surface 15Bc. The electrode surfaces 15Ac and 15Bc form a common ground (GND), and displacement detecting signals from the electrodes 23A and 23B on the both sides of the pendulum 12 are taken out by such a bridge circuit as depicted in Fig. 5. In Fig. 5, reference characters C_{A} and C_{B} denote electrostatic capacitances that are formed between the electrode 12A and the electrode surface 15Ac and between the electrode 23B and the electrode surface 15Bc, respectively; and R_{A} and R_{B} denote fixed resistances.

As shown in Fig. 5, an AC signal S is applied to the bridge circuit, and displacement detecting signals S_{A} and S_{B} are taken out from the electrodes 23A and 23B and are subjected to differential amplification, by which is obtained a detection signal corresponding to the difference between the electrostatic capacitances C_{A} and C_{B}. By applying current across the pair of coils 21 A and 12B based on the detection signal corresponding to the electrostatic capacitance differential, the pendulum 12 swings back toward its initial position and settles into equilibrium in the vicinity of the zero point under action of the current flowing the coils 21A and 21B and the magnetic fields by the permanent magnets 16A and 16B. The current at this time is in proportion to the acceleration applied to the pendulum; accordingly, the input acceleration can be derived.

Incidentally, an accelerometer of the type that is exposed to high temperatures as in the excavation of an oil field is required to have an excellent temperature characteristic that offers stable performance, that is, ensures accurate measurements even in high-temperature environments.

In this respect, the above conventional servo accelerometer is used at high temperatures (up to about 175°) and is so configured as to obtain the required temperature characteristic. That is, with a view to minimizing displacement of each constituent part or the occurrence of thermal stress, the frame 11, the pendulum 12 and the hinges 13 are formed of quartz and an invar material of a small thermal expansion coefficient is used for the housings 15A and 15B, and further, the outer ring 24 is also made of the invar material to bring its thermal expansion coefficient into agreement with those of the housings 15A and 15B.

For example, in the case of using the outer ring 24 as thin as 0.3 mm, however, since it differs greatly in shape from the housings 15A and 15B and hence differs from the latter in machining method, the outer ring 24 differs from the housings 15A and 15B in terms of thermal expansion coefficient. Consequently, when the accelerometer is exposed to high temperatures, thermal stress develops in the outer ring 24 and deforms it, which can incur the possibility of producing minute cracks in the conductive adhesive 25.

The development of such cracks in the conductive adhesive 25 causes changes in the conduction between the housings 15A and 15B, that is, provides a variable resistance R_{C} in the bridge circuit as depicted in Fig. 6―this gives rise to the problem that changes in the value of this variable resistance causes variations in the bias value of the accelerometer (bias shifts).

### SUMMARY OF THE INVENTION

It is therefore an object of the present invention to provide an accelerometer which is adapted to be free from the development of cracks in the conductive adhesive for conduction between the housing and the outer ring to prevent the occurrence of the bias-shift failure by the cracks and hence ensure stable and highly accurate measurements in high-temperature environments.

According to the present invention, there is provided an accelerometer for detecting the displacement of the pendulum corresponding to input acceleration, which comprises:
a frame for resiliently supporting inside thereof said pendulum through hinges;
a pair of opposed housings for housing therein said frame by holding therebetween said frame on both sides thereof;
a pair of electrodes formed on both sides of the pendulum opposite said pair of housings to provide electrostatic capacitances between said pair of electrodes and the both sides of said pendulum; and
an outer ring put on said pair of housings astride their opposed marginal edges and bonded by a conductive adhesive to the outer peripheral surfaces of said pair of housings, for establishing therebetween electric connections;
wherein said outer ring has a C-letter shape with a slit formed in its periphery.

### BRIEF DESCRIPTION OF THE DRAWINGS

Fig. 1 is a sectional view illustrating an embodiment of the accelerometer according to the present invention;
Fig. 2 is a side view of the Fig. 1 embodiment;
Fig. 3 is a sectional view showing a conventional accelerometer;
Fig. 4 is a sectional view taken along the line IC-IC in Fig. 3;
Fig. 5 is a schematic diagram showing a bridge circuit for taking out a displacement detecting signal based on a change in the electrostatic capacitance; and
Fig. 6 is a diagram depicting the bridge circuit when a failure has occurred in the accelerometer.

### DETAILED DESCRIPTION OF THE PREFERRED EMBODIMENT

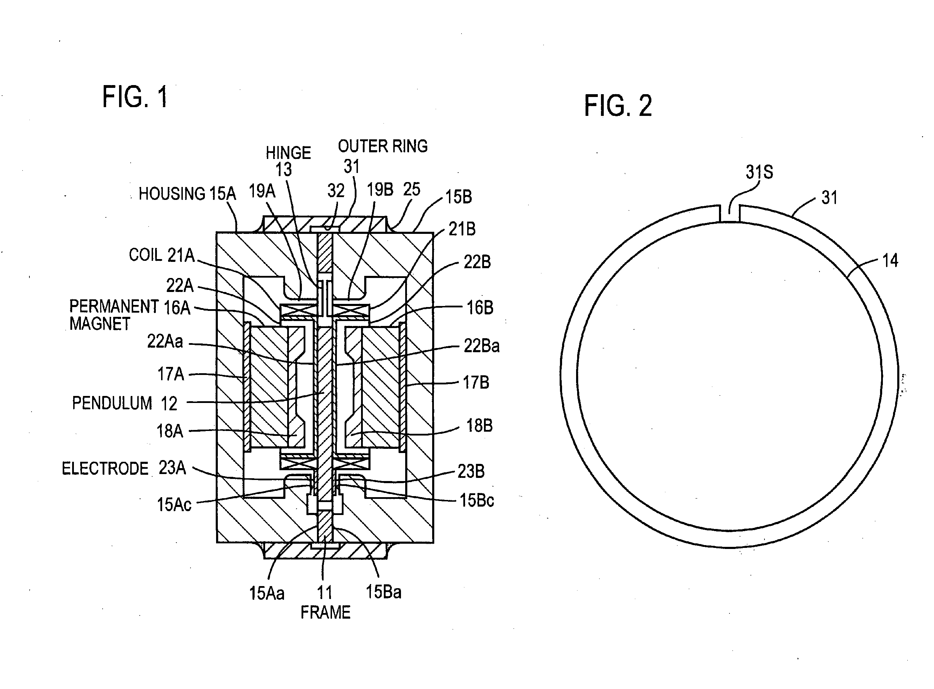

Figs. 1 and 2 illustrates an embodiment of the present invention, which is identical in construction with the accelerometer of Figs. 3 and 4 except the outer ring alone. Accordingly, the parts corresponding to those in Figs. 3 and 4 are identified by the same reference numerals and no detailed description will be repeated thereof.

Fig. 2 shows an outer ring 31 which is mounted around the housings 15A and 15B astride their opposed marginal edges and bonded thereto by the conductive adhesive 25 for conduction between the housings 15A and 15B. As shown, the outer ring 31 has a C-letter shape with part of its peripheral portion cut off to form a slit 31S.

The C-shaped outer ring 31 is formed of invar as is the case with the O-shaped outer ring 24 (which forms a closed loop) depicted in Fig. 3; namely, the outer ring 31 is formed of the same material as the housings 15A and 15B.

Since the C-letter configuration of the outer ring 31 permits sharp reduction of thermal stress that is produced when the accelerometer is exposed to high temperatures, no cracks develop in the conductive adhesive 25 according to this embodiment.

Accordingly, this embodiment is free from the generation of such a variable resistance R_{C} in the bridge circuit as shown in Fig. 3, and hence is free from the occurrence of what is called the bias-shift failure.

Incidentally, the outer ring 31 has a U-section groove (a clearance) 32 cut in its inner surface over the entire circumference thereof in opposing relation to the frame 11 to prevent the conductive adhesive 25 from permeating inwardly from the interface between the frame 11 and the housings 15A and 15B at the time of bonding thereto the outer ring 31.

While in the above the present invention has been described as being applied to the servo accelerometer, the invention is not limited specifically thereto but is applicable to electrostatic capacitance type servo accelerometers as long as they use outer rings of this kind.

### EFFECT OF THE INVENTION

As described above, according to the present invention, the C-shaped configuration of the outer ring effectively prevents thermal stress from being produced in the outer ring even if the accelerometer is subjected to high temperatures, and consequently, no cracks will develop in the conductive adhesive used for bonding the outer ring to the housings; hence, the accelerometer of the present invention is free from the failure that its bias value varies (the bias shifts) due to development of cracks in the conductive adhesive.

Accordingly, the present invention offers an accelerometer of excellent temperature characteristic which possesses stable performance in high-temperature environments.

## Claims

1. An accelerometer for detecting the displacement of a pendulum corresponding to input acceleration, said accelerometer comprising:
a frame for resiliently supporting inside thereof said pendulum through hinges;
a pair of opposed housings for housing therein said frame by holding therebetween said frame on both sides thereof;
a pair of electrodes formed on both sides of the pendulum opposite said pair of housings to provide electrostatic capacitances between said pair of electrodes and the both sides of said pendulum; and
an outer ring put on said pair of housings astride their opposed marginal edges and bonded by a conductive adhesive to the outer peripheral surfaces of said pair of housings, for establishing therebetween electric connections;
wherein said outer ring has a C-letter shape with a slit formed in its periphery.

2. The accelerometer of claim 1, wherein said outer ring has a U-section groove cut in its inner surface over the entire circumference thereof.
